Europäisches Patentamt

European Patent Office

Office européen des brevets

(11) Veröffentlichungsnummer: **0 303 068 B1**

(19)

(12) **EUROPÄISCHE PATENTSCHRIFT**

(45) Veröffentlichungstag der Patentschrift: **15.01.92**

(21) Anmeldenummer: **88111439.1**

(22) Anmeldetag: **15.07.88**

(51) Int. Cl.⁵: **F02F 11/00**, F16J 15/08, F01N 7/00

(54) Flanschverbindung mit einer mehrschichtigen Dichtung.

(30) Priorität: **13.08.87 DE 3727036**

(43) Veröffentlichungstag der Anmeldung:
**15.02.89 Patentblatt 89/07**

(45) Bekanntmachung des Hinweises auf die
Patenterteilung:
**15.01.92 Patentblatt 92/03**

(84) Benannte Vertragsstaaten:
**AT BE CH DE ES FR GB IT LI NL SE**

(56) Entgegenhaltungen:
**EP-A- 0 197 301**
**FR-A- 2 247 648**
**GB-A- 2 169 362**
**US-A- 2 954 763**

**PATENT ABSTRACTS OF JAPAN, vol. 10, no.
77 (M-464)[2134], 26. März 1986; & JP-A-60
220 265 (ASAHI ISHIWATA KOGYO K.K.)
02-11-1985**

(73) Patentinhaber: **Feodor Burgmann Dichtungswerke GmbH & Co.
Äussere Sauerlacher Strasse 6-8
W-8190 Wolfratshausen 1(DE)**

(72) Erfinder: **Bohatsch, Stefan
Wolkenstattstrasse 47
W-8197 Königsdorf(DE)**
Erfinder: **Hartling, Peter
Händelstrasse 1
W-8192 Geretsried(DE)**
Erfinder: **Bendl, Peter
Siedlungsstrasse 5
W-8192 Geretsried(DE)**
Erfinder: **Irmler, Josef
Am Kammerloh 12
W-8193 Münsing(DE)**

(74) Vertreter: **Empl, Karl et al
Patentanwälte Dipl.-Ing. K. Empl Dipl.-Ing.,
Dipl.-Wirtsch.-Ing. K. Fehners Schumannstrasse 2
W-8000 München 80(DE)**

## Beschreibung

Die Erfindung betrifft eine Flanschverbindung, bestehend aus zwei metallischen Flanschen, welche im Betrieb unterschiedliche Temperaturen annehmen, sowie einer zwischen den Flanschen mit Vorspannung gepreßten mehrschichtigen Dichtung, welche eine von einer flächigen Metallschicht gebildeten Mittellage und beiderseits von dieser angeordnete, jeweils an einem der Flansche anliegende, aus Dichtungsmaterial gebildete Außenlagen enthält.

Derartige Flanschverbindungen sind bekannt und finden Anwendung in vielen unterschiedlichen Maschinen und Anlagen, wobei jedoch Probleme hinsichtlich der Dichtwirkung der Flanschverbindung und der Dauerstandsfestigkeit der darin enthaltenen Dichtung auftreten können, die durch einen Verzug der Flansche und relativ Schiebebewegungen der Flansche bedingt sind. Diese Probleme treten in verstärktem Maß dann auf, wenn die Flanschverbindung sehr hohen Temperaturen und/oder häufigen Heiß-Kalt-Zyklen ausgesetzt ist. Derartige schwierige Einsatzbedingungen sind insbesondere bei den Flanschverbindungen zwischen Zylinderkopf und Auspuffkrümmer on Brennkraftmaschinen gegeben, wobei die Dichtungen noch zusätzlichen Belastungen dadurch ausgesetzt sind, daß in der Regel mehrere Flanschverbindungen nebeneinander angeordnet sind, deren eine Flansche durch den Zylinderkopf starr miteinander verbunden sind, während deren andere Flansche starr durch den Auspuffkrümmer verbunden sind, der temperatur- und alterungsbedingte Verformungen erleidet.

Aufgabe der Erfindung ist es, eine Flanschverbindung der eingangs genannten Art so weiterzubilden, daß auch bei hohen Temperaturen, Heiß-Kalt-Zyklen, sowie Verwerfungen und relativen Schiebebewegungen ihrer Flansche eine zuverlässige Abdichtung gegeben ist und eine hinreichende Lebensdauer der Dichtung erreicht wird.

Diese Aufgabe wird erfindungsgemäß dadurch gelöst, daß die erste, an dem die niedrigere Temperatur aufweisenden Flansch anliegende Außenlage der Dichtung aus einer Elastomerschicht besteht, daß die zweite an dem die höhere Temperatur aufweisenden Flansch anliegende Außenlage aus einer Schicht aus blättchenförmig oder faserförmig strukturiertem anorganischen, wärmeisolierendem Material besteht und daß die Metallschicht aus Aluminiumblech oder einem auf seiner dem Flansch mit der höheren Temperatur zugewandten Seite mit einem Aluminiumbelag versehenen Stahlblech besteht.

Es ist zwar bekannt, daß Elastomere als Dichtungsmaterial auch größere Unebenheiten von gegeneinander abzudichtenden Flächen ausgleichen können.

Die Fachwelt war aber bisher von dem Vorurteil befangen, daß der Einsatz von Elastomeren durch die maximale Temperatur am Einbauort, d. h. durch die Temperatur des wärmsten Flansches begrenzt ist. Demgegenüber setzt die Erkenntnis der Erfindung ein, daß der Einsatz einer Elastomerschicht nur durch die Temperatur des kälteren der beiden Flanschen begrenzt ist, und zwar dann, wenn diese Schicht gegen den wärmeren Flansch durch eine wärmeisolierende Schicht abgeschirmt ist und an dem wärmeren Flansch eine dessen Temperatur angepaßte, d. h. im Vergleich zu Elastomeren wärmebeständigere Schicht aus Dichtungsmaterial anliegt. Eine weitere Erkenntnis der Erfindung besteht darin, daß die erhebliche elastische Verformbarkeit der Elastomerschicht auch die an sich beschränktere Anpassungsfähigkeit der temperaturbeständigeren Schicht verbessert und damit auch deren Dichtwirkung bei einem Flanschverzug sicherstellt.

Bei einer bevorzugten Ausführungsform der Erfindung besteht das in der zweiten Schicht enthaltene anorganische wärmeisolierende Material aus Glimmer, während die Elastomerschicht aus einem Fluor-Elastomer besteht und die Metallschicht von einem Edelstahlblech gebildet ist.

Gemäß einer Weiterbildung der Erfindung steht wenigstens die Metallschicht der Dichtung seitlich über die Flanschen vor und bildet eine Wärme-Abschirmfläche. Hierdurch lassen sich wärmeempfindliche Bauteile auf einfache Weise gegen Wärmeeinwirkung schützen, beispielsweise gegen die durch Konvektion und Strahlung abgegebene Wärme eines Auspuffkrümmers. Gemäß einer anderen zweckmäßigen Ausgestaltung sind wenigstens die Metallschichten mehrerer Dichtungen durch einen einstückig angeformten Steg miteinander verbunden, so daß eine sogenannte Gruppendichtung gebildet wird.

Gemäß einer bevorzugten Ausgestaltung der Erfindung ist der mehrere Dichtungen verbindende Steg wenigstens teilweise durch die Wärme-Abschirmfläche gebildet, sodaß eine Gruppendichtung mit Wärme-Abschirmung erhalten wird. Wird eine größere Steifigkeit oder Wärme-Abschirmwirkung der Stege und/oder der Wärme-Abschirmfläche gewünscht, können sich über deren Fläche über die Flanschen vorstehende Verlängerungen der ersten und/oder zweiten Schichten (Außenlagen) der Dichtung ganz oder teilweise erstrecken.

Nachfolgend werden Ausführungsbeispiele der Erfindung anhand der Zeichnungen erläutert, in denen zeigt:

Fig. 1     eine teilweise geschnittene Seitenansicht einer Flanschverbindung;

Fig. 2     eine Draufsicht auf eine in der Flanschverbindung gemäß Fig. 1 einsetzbare Dichtung, wobei in unterbrochenen Linien eine Weiterbildung als Mehrfachdichtung veranschaulicht ist;

Fig. 3 einen Schnitt in vergrößertem Maßstab der Einzelheit E in Fig. 1 für eine erste Ausführungsform der Dichtung;

Fig. 4 einen Schnitt in vergrößertemMaßstab der Einzelheit E in Fig. 1 für eine zweite Ausführungsform der Dichtung und

Fig. 5 eine perspektivische Darstellung einer Modifikation mit mehreren, miteinander verbundenen Dichtungen und einer angeformten Wärme-Abschirmfläche.

Die erfindungsgemäße Flanschverbindung, welche im wesentlichen aus zwei Flanschen 1, 2 und einer Dichtung 3 besteht, wird im folgenden für ihre bevorzugte Ausführungsform als Verbindung zwischen dem Zylinderkopf 1' und dem Auspuffkrümmer 2' eines Brennkraftmotors erläutert. Dabei nimmt im Betrieb der am Zylinderkopf 1' feste Flansch 1 wegen der Kühlung des Zylinderkopfes eine geringere Temperatur an als der an dem durch die Abgase stärker erhitzten Auspuffkrümmer 2' sitzende Flansch 2.

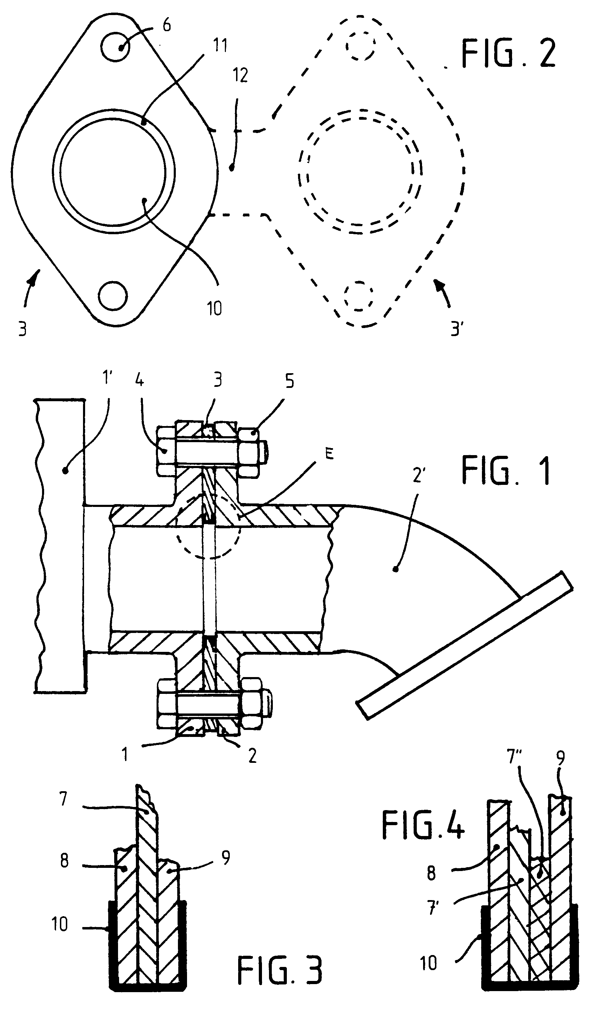

Die als Flachdichtung ausgebildete Dichtung 3 ist zwischen den ebenen Anlageflächen der Flansche 1, 2 eingespannt, welche durch Schrauben 4 und Muttern 5 zusammengehalten sind, welche zwei Bohrungen 6 der Dichtung durchdringen. Die Dichtung 3 enthält in einer durch die Fig. 3 veranschaulichten ersten Ausführungsform drei flächige Schichten 7, 8 und 9. Die mittlere Metallschicht 7 besteht aus Aluminiumblech bzw. einer Aluminiumfolie. Diese ist auf der Seite, welche dem die niedrigere Temperatur aufweisenden Flansch 1 zugewandt ist, mit einer Elastomerschicht 8 bedeckt. Als Material für diese Schicht ist ein Fluorelastomer besonders geeignet. Die andere, dem die höhere Tempeperatur aufweisenden Flansch 2 zugewandte Seite der Metallschicht 7 ist mit einer Schicht 9 aus Glimmer bedeckt.

Die Schichten 8 und 9 sind durch Verkleben mit der Metallschicht 7 verbunden. Im Falle der Schicht 8 kann die Verbindung auch durch Vulkanisation erfolgen. Ergänzend oder alternativ zur Verklebung bzw. Vulkanisation kann jede der Schichten 8, 9 mit der Metallschicht 7 durch aus dieser ausgestanzte, nach außen gebogene Spieße und/oder durch eine die mittlere Durchlaßöffnung 10 als Bördel umgreifende, die Dichtung vor dem Angriff der Auspuffgase schützende Randeinfassung 11 aus Metallblech verbunden sein. Derartige Randeinfassungen können auch am Außenumfang der Dichtung 3 und/oder an den Bohrungen 6 vorgesehen sein.

Eine zweite Ausführungsform (Fig. 4) entspricht der vorstehend erläuterten Dichtung, enthält aber eine Metallschicht, die sich aus einem Stahlblech bzw. Edelstahlblech 7' und einem Aluminiumbelag 7" zusammensetzt. Der Aluminiumbelag 7" kann auf das Stahlblech 7' als Trägermaterial aufgebracht werden, beispielsweise durch Spritzen oder Aufdampfen. Er kann auch durch eine Aluminiumfolie gebildet sein, die mit dem Stahlblech 7' durch eine der Befestigungsarten verbunden ist, wie sie vorstehend für die erste Ausführungsform der Dichtung erläutert wurden. In jedem Fall ist der Aluminiumbelag 7" auf der Seite des Stahlbleches 7' angeordnet, welche dem Flansch 2 mit der höheren Temperatur zugewandt ist, d. h. an den Aluminiumbelag schließt sich die Schicht 9 aus Glimmer an.

Die Fig. 2 zeigt unter Berücksichtigung auch des in unterbrochenen Linien veranschaulichten Teils eine Gruppendichtung, bei der zwei Dichtungen 3, 3' durch einen Steg 12 miteinander verbunden sind. Dieser Steg besteht wenigstens aus den einstückig miteinander verbundenen Metallschichten 7 der beiden Dichtungen. Wird eine größere Steifigkeit des Steges 12 gewünscht bzw. kann diese hingenommen werden, so können sich auch eine oder beide der außenliegenden Schichten (Elastomerschicht bzw. Glimmerschicht) über den Steg hinweg einstückig erstrecken. Soll die Steifigkeit des Steges 12 insbesondere gegen Zug- und Druckbeanspruchungen in der Ebene der Dichtung vermindert werden, erhält der Steg eine sich über dessen ganze Breite erstreckende Sicke.

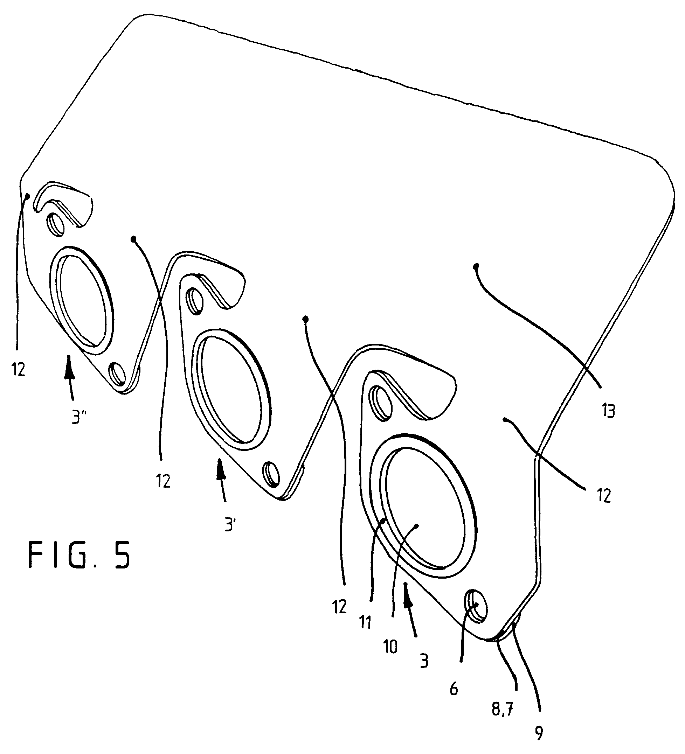

Eine für den speziellen Einsatz zwischen den Flanschen einerseits am Zylinderkopf, andererseits am Auspuffkrümmer geeignete Ausführungsform der Dichtung ist in Fig. 5 veranschaulicht. Die einzelnen Dichtungen 3, 3' und 3" sind durch Stege 12 mit einer gemeinsamen großflächigen Abschirmfläche 13 einstückig verbunden, welche daher sowohl einen Teil des die einzelnen Dichtungen zu einer Gruppendichtung vereinigenden Steges bildet, als auch der Wärme-Abschirmung dient. Trotz der Zusammenfassung der einzelnen Dichtungen 3, 3', 3" können diese den Bewegungen der ihnen zugeordneten Flansche praktisch ungehindert folgen, weil sich die Stege 12 wenigstens näherungsweise in lotrechter Richtung zu einer durch die Mitten der Bohrungen 10 der Dichtungen gelegten Geraden erstrecken und in ihrer Breite durch Schlitze bzw. Öffnungen reduziert sind.

**Patentansprüche**

1. Flanschverbindung, bestehend aus zwei metallischen Flanschen, welche im Betrieb unterschiedliche Temperaturen annehmen, sowie einer zwischen den Flanschen mit Vorspannung gepreßten mehrschichtigen Dichtung, welche eine von einer flächigen Metallschicht gebildete Mittellage und beiderseits von dieser angeordnete, jeweils an einem der Flansche anliegende, aus Dichtungsmaterial gebildete Außenlagen enthält, **dadurch gekennzeichnet, daß** die erste, an dem die niedrigere Temperatur aufweisenden Flansch (1) anliegende Außenlage der Dichtung aus einer Elastomerschicht (8) besteht, daß die zweite, an dem die höhere Temperatur aufweisenden Flansch (2) anliegende Außenlage aus einer Schicht (9) aus blättchenförmig oder faserförmig strukturiertem anorganischen, wärmeisolierendem Material besteht und daß die Metallschicht (7) aus Aluminiumblech oder einem auf seiner dem Flansch (2) mit der höheren Temperatur zugewandten Seite mit einem Aluminiumbelag (7″) versehenen Stahlblech (7′) besteht.

2. Flanschverbindung nach Anspruch 1, **dadurch gekennzeichnet, daß** das in der zweiten Schicht (9) enthaltene anorganische wärmeisolierenden Material aus Glimmer besteht.

3. Flanschverbindung nach Anspruch 1, **dadurch gekennzeichnet, daß** die Elastomerschicht (8) aus einem Fluorelastomer besteht.

4. Flanschverbindung nach Anspruch 1, **dadurch gekennzeichnet, daß** die Metallschicht (7) von einem Edelstahlblech gebildet ist.

5. Flanschverbindung nach Anspruch 1, **dadurch gekennzeichnet, daß** wenigstens die Metallschicht (7) der Dichtung seitlich über die Flanschen (1, 2) vorsteht und eine Wärme-Abschirmfläche (13) bildet.

6. Flanschverbindung nach Anspruch 1, **dadurch gekennzeichnet, daß** wenigstens die Metallschichten (7) mehrerer Dichtungen (3, 3′, 3″) durch einen einstückig angeformten Steg (12) mit einander verbunden sind.

7. Flanschverbindung nach Anspruch 1, 5 und 6, **dadurch gekennzeichnet, daß** der mehrere Dichtungen (3, 3′, 3″) verbindende Steg (12) wenigstens teilweise durch die Wärme-Abschirmfläche (13) gebildet ist.

8. Flanschverbindung nach einem der vorhergehenden Ansprüche, **dadurch gekennzeichnet, daß** der die niedrigere Temperatur aufweisende Flansch (1) durch den Zylinderkopf-Flansch und daß der die höhere Temperatur aufweisende Flansch (2) durch den Auspuffkrümmer-Flansch eines Brennkraftmotors gebildet ist.

**Claims**

1. A flanged connection comprising two metallic flanges, which assume different temperatures in operation, and a multi-layer seal which is pressed between the flanges with prestress and contains a central layer formed by a flat metal layer and outer layers arranged on both sides of the said central layer, each resting against one of the flanges and formed from packing material, characterised in that the first outer layer of the seal, which layer rests against the flange (1) having the lower temperature, comprises an elastomer layer (8), in that the second outer layer, which rests against the flange (2) having the higher temperature, comprises a layer (9) of inorganic, thermally insulating material having a lamellar or fibrous structure and in that the metal layer (7) comprises aluminium sheet or a steel sheet (7′) provided on its side facing the flange (2) having the higher temperature with an aluminium covering (7″).

2. A flanged connection according to claim 1, characterised in that the inorganic, thermally insulating material contained in the second layer (9) is composed of mica.

3. A flanged connection according to claim 1, characterised in that the elastomer layer (8) is composed of a fluoroelastomer.

4. A flanged connection according to claim 1, characterised in that the metal layer (7) is formed by a sheet of high-grade steel.

5. A flanged connection according to claim 1, characterised in that at least the metal layer (7) of the seal projects laterally beyond the flanges (1, 2) and forms a heat-shielding surface (13).

6. A flanged connection according to claim 1, characterised in that at least the metal layers (7) of a plurality of seals (3, 3′, 3″) are connected to one another by an integrally formed web (12).

7. A flanged connection according to claim 1, 5 and 6, characterised in that the web (12) connecting a plurality of seals (3, 3′, 3″) is at least partially formed by the heat-shielding surface (13).

8. A flanged connection according to any one of the preceding claims, characterised in that the flange (1) having the lower temperature is formed by the cylinder-head flange and in that the flange (2) having the higher temperature is formed by the exhaust-manifold flange of an internal-combustion engine.

**Revendications**

1. Connexion de brides constitué de deux brides métalliques exposées en service à des températures respectivement différentes, ainsi que d'une garniture à multiples couches insérée sous pression initiale entre lesdites brides et qui contient un insert central formé d'une couche métallique mince et de couches extérieures disposées des deux côtés de l'insert central, qui s'appliquent chacune contre l'une des brides, et sont constituées en un matériau étanche, caractérisé par le fait que la première couche extérieure du joint appliquée contre la bride (1) exposée à la température la plus basse est formée d'une couche en élastomère (8), que la deuxième couche extérieure appliquée contre la bride (2) exposée à la température la plus élevée est formée d'une couche (9) en matériau thermo-isolant anorganique à structure fibreuse ou à lamelles, et par le fait que la couche métallique (7) est constituée d'une tôle d'aluminium ou d'une tôle d'acier (7') munie sur la face orientée vers la température la plus élevée d'une garniture en aluminium (7").

2. Connexion de brides selon la revendication 1, caractérisé par le fait que le matériau thermo-isolant anorganique contenu dans la deuxième couche (9) est constitué en mica.

3. Connexion de brides selon la revendication 1, caractérisé par le fait que la couche en élastomère (8) est constituée en un élastomère au fluor.

4. Connexion de brides selon la revendication 1, caractérisé par le fait que la couche métallique (7) est constituée en tôle d'acier spécial.

5. Connexion de brides selon la revendication 1, caractérisé par le fait qu'au moins la couche métallique (7) de la garniture fait saillie latéralement des brides (1, 2) et forme un écran de protection contre la chaleur (13).

6. Connexion de brides selon la revendication 1, caractérisé par le fait qu'au moins les couches métalliques (7) de plusieurs garnitures (3, 3', 3") sont reliées mutuellement par une barrette (12) incorporée auxdites couches métalliques au moulage et formant une seule pièce avec elles.

7. Connexion de brides selon les revendications 1, 5 et 6, caractérisé par le fait que la barrette (12) reliant plusieurs garnitures (3, 3', 3") est formée au moins partiellement par l'écran de protection contre la chaleur (13).

8. Connexion de brides selon l'une des revendications précédentes, caractérisé par le fait que la bride (1) exposée à la température la plus basse est la bride de la cul asse et que la bride (2) exposée à la température la plus élevée est la bride du pot d'échappement d'un moteur à combustion.

FIG . 2

FIG. 1

FIG.4

FIG. 3

FIG. 5